# EUROPEAN PATENT SPECIFICATION

(11) **EP 2 058 600 B1**
(45) Date of publication and mention of the grant of the patent: **12.08.2015**
(21) Application number: 07792964.4
(22) Date of filing: 24.08.2007
(51) Int. Cl.: F24F 13/28, B01D 46/48, F24F 3/16

(54) **AIR CONDITIONER**
KLIMAANLAGE
CLIMATISEUR

(30) Priority: 31.08.2006 JP 2006235986
(43) Date of publication of application: 13.05.2009
(73) Proprietor: Daikin Industries, Ltd., Osaka 530-8323 (JP)
(72) Inventor: NAKANISHI, Junichi, Kusatsu-shi Shiga 525-0044 (JP)
(74) Representative: Hoffmann Eitle
(86) International application number: PCT/JP2007/066435
(87) International publication number: WO 2008/026512

(56) References cited:
- EP-A2- 1 640 671
- WO-A1-2005/026623
- JP-A- 2001 099 479
- JP-A- 2001 201 438
- JP-U- 62 145 019
- JP-U- 62 145 019
- US-A1- 2005 161 387

## Description

### TECHNICAL FIELD

The present invention relates to an air conditioner and particularly to an air conditioner provided with an air filter automatic cleaning function.

### BACKGROUND ART

In an air conditioner, in which room air taken in by a blower fan is cooled or heated by being passed through a heat exchanger and is then returned into a room, an air filter is provided on front side of the heat exchanger in order to prevent the heat exchanger from being contaminated with dust floating in the air. On condition that adhesion of the dust to the filter causes clogging and an increase in ventilation resistance, air conditioning capacity of the air conditioner is decreased and power consumption is increased. In order to dissolve such an inconvenience, various types of air conditioners provided with automatic filter cleaning function have been proposed.

In automatic cleaning of the filter, at least one of the filter and a cleaning brush is required to be moved in order that whole surfaces of the filter may be cleaned by the cleaning brush. Methods of moving an air filter are generally classified into winding types and loop types. As disclosed in Patent Literature 1 (JP 2001-99479 A), the winding types are those in which a belt-like filter wound on one roller is rewound onto the other roller so as to be moved, and in which cleaning is performed by a cleaning brush in that process. As disclosed in Patent Literature 2 (JP 62-145019 U), the loop types are those in which a belt-like filter shaped like a loop is supported by a pair of rollers, in which the belt-like filter is moved by rotation of the rollers, and in which cleaning is performed by a cleaning brush in that process.

In such air conditioners of the winding types and the loop types, dust removed from the air filter by the cleaning brush is accumulated in a dust box, which is periodically removed, and then the dust in dust box is dumped.

EP 1640671 discloses an air conditioner according to the preamble of appending claim 1.

### SUMMARY OF INVENTION

### TECHNICAL PROBLEM

In conventional air conditioners, however, it is often difficult to understand a method for removing a dust box, and/or bothersome works may have to be performed for the removal. Besides, it is often difficult to remove the dust box in a stable manner and, for instance, prompt pullout of the dust box, sudden spring-out and fall-off of the dust box, and the like may lead to scattering of dust in the dust box around, causing such a trouble as soiling of inside of the air conditioner, interior of a room and the like.

The present invention was made in order to solve conventional problems described above, and an object thereof is to provide an air conditioner provided with an air filter automatic cleaning function having improved operability in removal of a dust box.

### SOLUTION TO PROBLEM

In order to achieve the object, there is provided an air conditioner having a filter automatic cleaning function of removing dust deposited on air filters, the air conditioner comprising:
a dust box for accommodating the dust removed from the air filters, and
a removal unit for removing the dust box from main unit side, wherein
the removal unit comprises:
   an operating member provided on the main unit side, and
   a push-out member for pushing out the dust box in an outward direction from the main unit side by an operation of the operating member.

In the air conditioner of the invention, in which the dust box is pushed out in the outward direction with respect to the main unit by an operation of the operating member and is thus allowed to be removed, a method for removing the dust box can easily be understood and bothersome works do not have to be performed for the removal of the dust box.

In one embodiment, the push-out member is provided on the main unit side and is configured so that a quantity by which the push-out member is pushed out gradually increases in accordance with a quantity by which the operating member is moved.

According to the embodiment, the dust box is configured so as to be pushed out in accordance with a quantity by which the operating member is moved, and thus the dust box can smoothly be removed.

In one embodiment, the removal unit comprises fall-off restriction members for restricting fall-off of the dust box from the main unit side when the dust box is pushed out by the push-out member.

According to the embodiment, the fall-off restriction member restricts the fall-off of the dust box from the main unit side when the dust box is pushed out, and thus the dust box can stably be removed. Therefore, troubles can reliably be prevented such as scattering of dust in the dust box which may soil vicinity of the air conditioner, interior of a room and the like.

In one embodiment, the removal unit comprises holder members for holding the dust box on the main unit side while the dust box is attached to the main unit side.

According to the embodiment, the dust box is held in the main unit side by the holder members while the dust box is attached to the main unit side, and thus the dust box is reliably held. Therefore, troubles can reliably be prevented such as scattering of dust in the dust box which may soil vicinity of the air conditioner, interior of a room and the like.

In one embodiment, the dust box and the operating member are provided so as to be exposed on an outer surface thereof.

According to the embodiment, the dust box and the operating member are provided so as to be exposed on the outer surface, and thus a method for removing the dust box can intuitively be understood at a glance.

In one embodiment, the dust box and the operating member are provided between a front panel and air outlets on the main unit side.

According to the embodiment, handling of the dust box is facilitated and operability of the operating member is improved.

In one embodiment, the dust box can be attached to and detached from the main unit side with the front panel on the main unit side remaining closed.

According to the embodiment, the dust box can be attached and detached with the front panel closed, and thus saving in efforts to open and remove the front panel further increases the operability.

### BRIEF DESCRIPTION OF DRAWINGS

Fig. 1 is an exploded perspective view of an air conditioner in accordance with an embodiment of the invention;
Fig. 2 is a vertical section of the air conditioner;
Fig. 3 is a perspective view of a filter unit;
Fig. 4 is a diagram showing status in which movable guides of the filter unit have been opened;
Fig. 5 is a vertical section of the filter unit;
Fig. 6 is a diagram showing the status in which the movable guides of the filter unit have been opened;
Fig. 7 is a diagram showing status in which filters of the filter unit are being automatically cleaned;
Fig. 8 is a perspective view of an air filter;
Fig. 9 is a perspective view showing status in which the air filter is engaged with a loop-like belt;
Fig. 10 is a perspective view of a cleaner unit;
Fig. 11 is a perspective view showing status in which a dust box of the cleaner unit is opened;
Fig. 12 is a perspective view showing one end part of the dust box;
Fig. 13 is a perspective view showing a relation between the one end part of the dust box and a removal unit;
Figs. 14(a), 14(b), and 14(c) are cross sections for illustrating an operation for removing the dust box; and
Figs. 15(a) and 15(b) are perspective views for illustrating the operation for removing the dust box.

### DESCRIPTION OF EMBODIMENTS

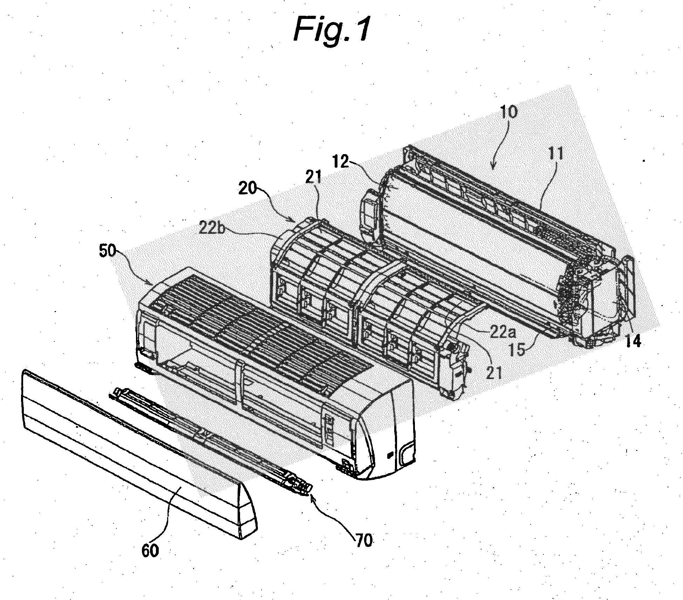

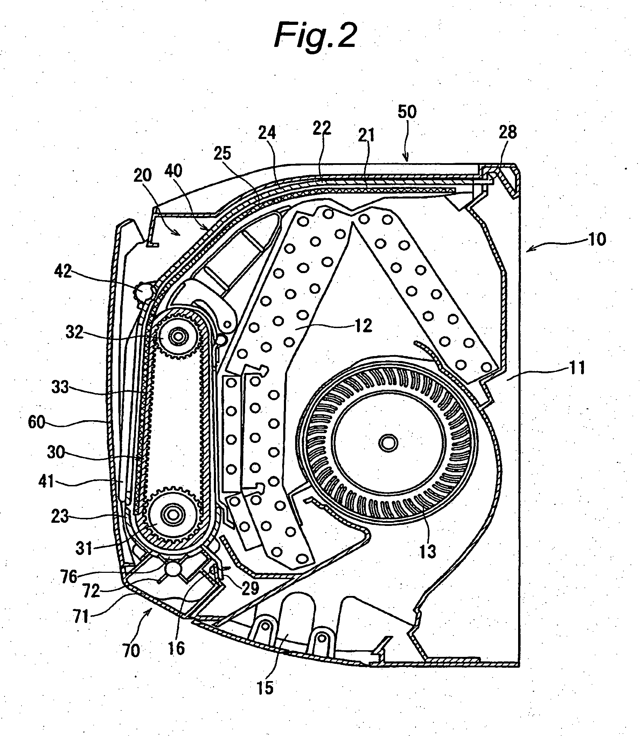

Hereinbelow, specific embodiments of air conditioners of the invention will be described in detail with reference to the drawings. Fig. 1 is an exploded general perspective view of an air conditioner and Fig. 2 is a vertical section of the same. The air conditioner has a main unit 10, a filter unit 20, an exterior case 50, and a cleaner unit 70.

The main unit 10 includes a bottom frame 11 to which an indoor heat exchanger 12, a blower fan (cross flow fan) 13, an electrical equipment box 14 and the like are attached, and performs air conditioning operations such as cooling, heating, and dehumidification while taking in room air. On a lower face of the bottom frame 11 are formed air outlets 15 for returning into a room the air that has been taken in and has been conditioned.

The filter unit 20 is integrally composed of air filters 21, 21, moving units 30 ... for moving the air filters 21, 21, and a guide section 40 for guiding the air filters 21, 21 along moving paths.

Initially, the guide section 40 will be described. The guide section 40 has a pair of right and left guide frames 22a, 22b forming the moving paths of the air filters 21, 21, which are movably supported by the guide frames 22 (the guide frames will be designated by a reference sign 22 hereinbelow provided that no distinction between the right and left is specially made).

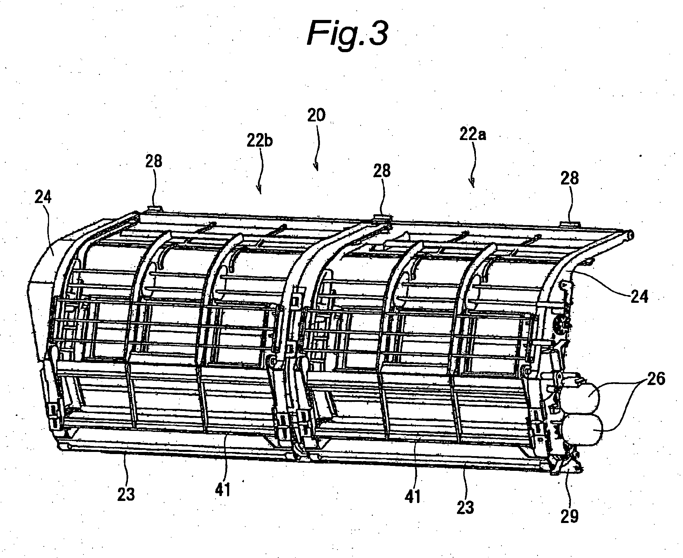

As shown in Fig. 3, the guide frames 22 have main frames 23 in lower parts thereof and arms 24 extending in a diagonal upward direction from the main frames 23. The moving units 30, 30 for the filters 21 that will be described later are attached to the main frames 23, and the arms 24 having groove-like guides 25 (see Fig. 2) formed on insides thereof have functions of holding the filters 21 in specified positions in normal use and guiding both sides of the filters 21 when the filters 21 move.

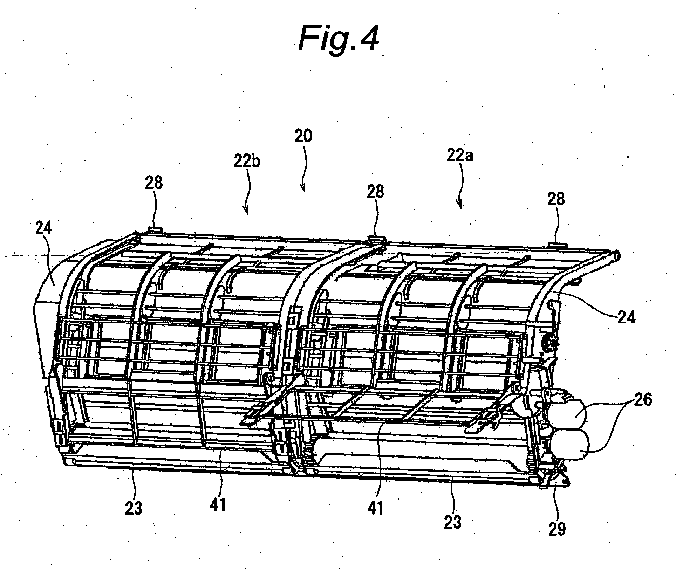

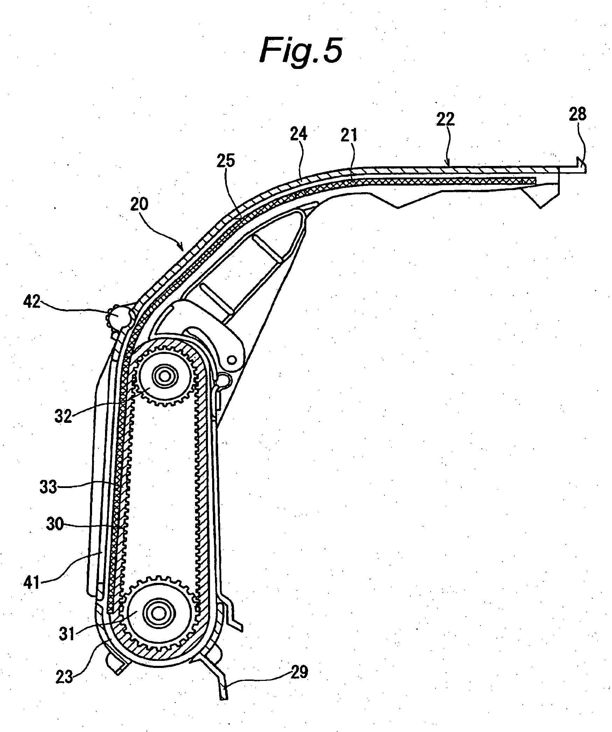

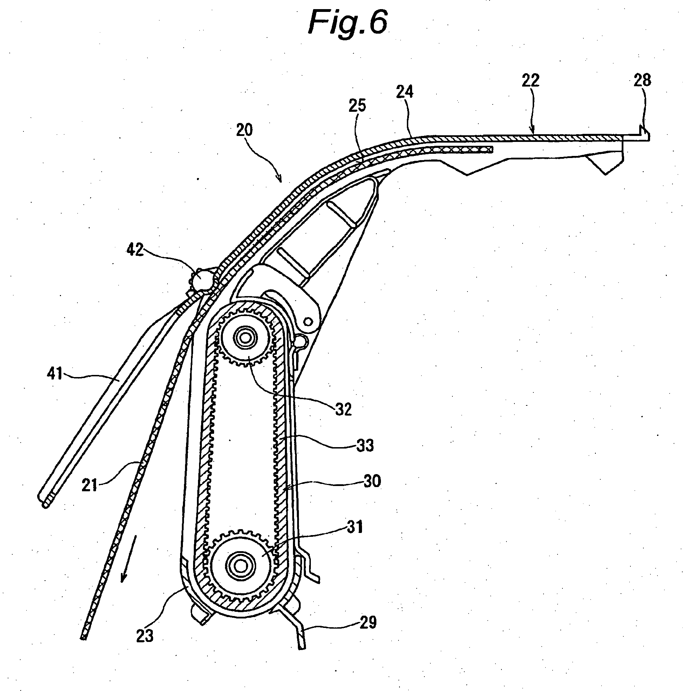

Parts of the main frames 23 in front of the moving units 30, 30 form movable guides 41. In each movable guide 41, an upper end part thereof is pivotably supported about a horizontal shaft 42 through medium of a latching mechanism and a lower end part thereof can be opened forward. That is, the movable guide 41 can be switched between a closed state (see Figs. 3 and 5) in which the guide forms the moving path and an open state (see Figs. 4 and 6) in which the guide opens the moving path so as to allow the air filter 21 to be detached and attached.

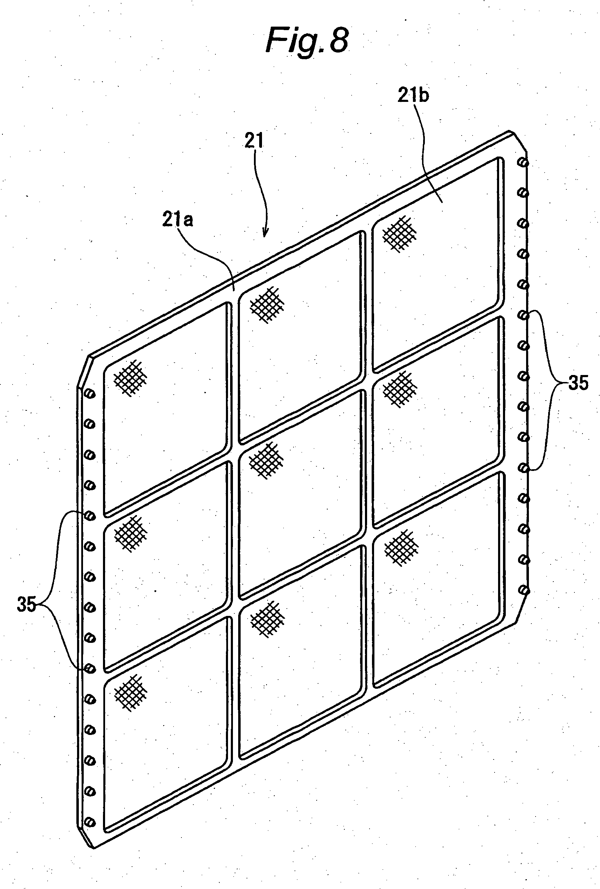

As shown in Fig. 8, the air filters 21 are each formed of a grid-like frame 21a onto which meshes 21b are stuck, and generally have flexibility. On back surfaces of both end parts of the frame 21a that extend along a vertical direction, a plurality of projections 35 ... protrude with a uniform vertical pitch.

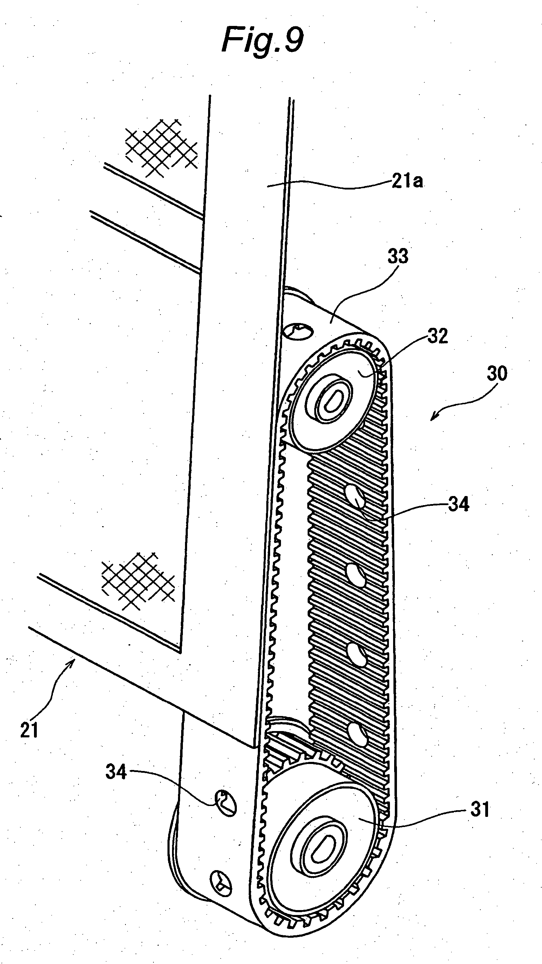

As shown in Figs. 5 and 9, the moving units 30 each have a pair of lower and upper pulleys 31, 32 for toothed belt which pulleys are spaced from each other in a direction of movement of the air filter 21, a driving motor 26 (see Fig. 3) for driving and rotating the lower pulley 31, and an loop-like toothed belt 33 stretched between both the pulleys 31 and 32. With the lower pulley 31 driven and rotated by the motor 26, the upper pulley 32 is driven and rotated, so that the loop-like belt 33 is circulated. In each frame 22 are provided two moving units 30 as a pair of left and right units.

As shown in Fig. 9, fitting holes 34 ... are formed on a whole circumference of the loop-like belt 33 at a specified interval (with a uniform pitch). Thus fitting of the projections 35 ... of the air filter 21 into the fitting holes 34 ... of the loop-like belts 33 engages the air filter 21 with the loop-like belts 33, and pull-out of the projections 35 ... of the air filter 21 from the fitting holes 34 ... of the loop-like belts 33 disengages the air filter 21 from the loop-like belts 33.

In this configuration, the filter 21 is attached in an initial position (position for normal use) such that a lower end of the filter 21 is positioned adjacent to the lower pulleys 31. In this state, as shown in Fig. 5, upper part of the filter 21 is guided and supported from both sides thereof by the arm 24 of the frame 22. Lower part of the filter 21 is guided and supported from front side thereof by a back surface of the movable guide 41. As is the case with conventional air conditioners, the filters 21 generally covers a whole area of upstream side of the indoor heat exchanger 12 so as to prevent contamination of the indoor heat exchanger 12 with dust floating in air.

As shown in Fig. 2, the filter unit 20 having such a configuration is detachably mounted on the bottom frame 11 of the main unit 10, so as to cover front face side and top face side of the indoor heat exchanger 12 of the main unit 10, by engagement pawls 28 ... provided at adequate horizontal intervals on upper end parts of the arms 24, 24 of the guide frames 22a, 22b and engaged with upper end part of the bottom frame 11 of the main unit 10 and by mount pieces 29, 29 protruded on lower end parts of the main frames 23, 23 and fixed by screws 16 ... to vicinities of the air outlets 15 of the bottom frame 11 of the main unit 10. Provided that the filter unit 20 is removed from the main unit 10 and that another filter unit, e.g., having only filters or filters with a deodorizing function is substitutionally installed, therefore, it is made possible to achieve type change to an air conditioner not having automatic cleaning function and to address a plurality of machine types at low cost with use of the main unit 10 in common.

The exterior case 50 is detachably mounted on the filter unit 20 so as to cover the main unit 10 and the filter unit 20 from outside. The exterior case 50 includes a front panel 60, which can be opened and closed, on front face side thereof, and the movable guides 41, 41 for the filter unit 20 are placed on back side of the front panel 60. Accordingly, opening or removal of only the front panel 60 without removal of the whole exterior case 50 exposes the movable guides 41, 41 so as to allow opening/closing operations thereof and thus allows the air filters 21, 21 to be detached and attached.

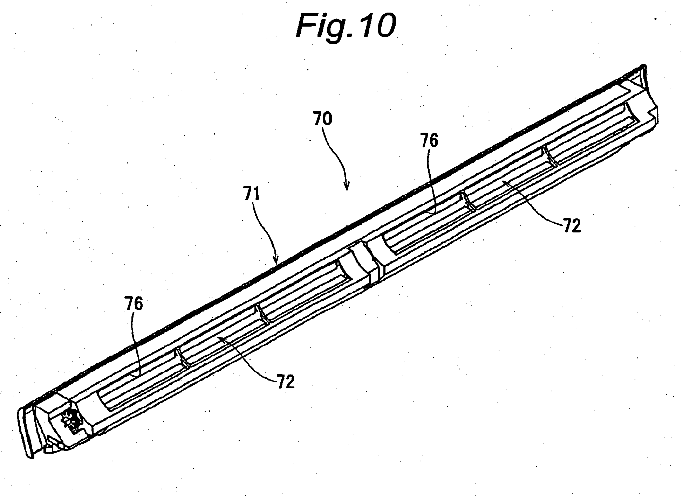

As shown in Fig. 10, the cleaner unit 70 is composed by integral provision of a dust box 71 for accommodating dust removed from the air filters 21 and a pair of rotating brushes 72, 72 for scraping dust deposited on the air filters 21. The rotating brushes 72, 72 are driven and rotated by driving units such as driving motors not shown.

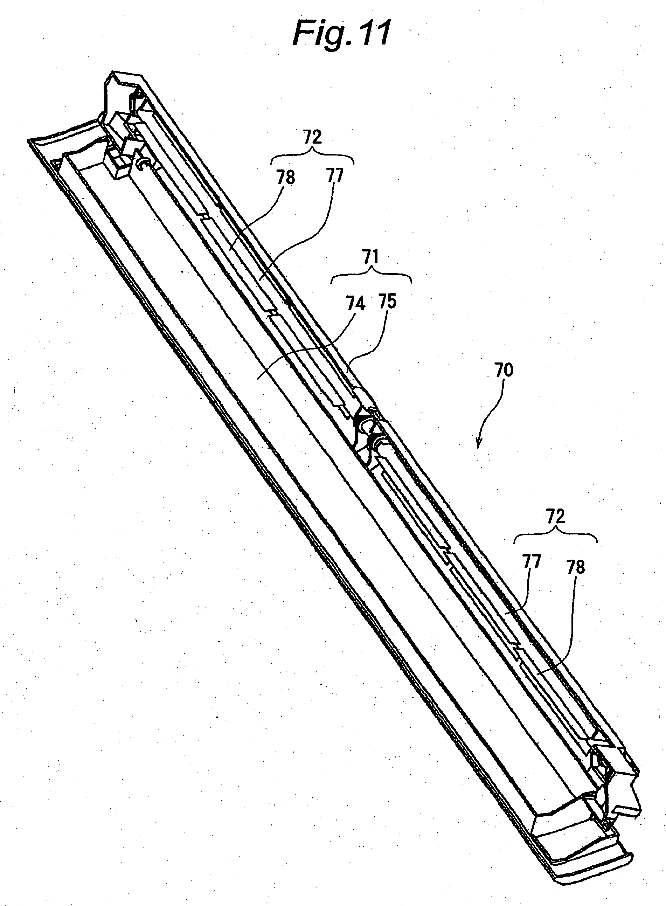

As shown in Fig. 11, the dust box 71 is formed in shape of a laterally long box by combination of a main case 74 having a dust accommodating section and of a cover case 75 supported pivotably on the main case 74. On the cover case 75 are formed oblong dust intakes 76.

As shown in Fig. 2, the dust box 71 is detachably mounted on lower part of the exterior case 50 with the dust intakes 76 opened under the moving units 30 ... and with the dust box 71 exposed on an outer surface of the air conditioner between the front panel 60 and the air outlets 15. The dust box 71 can be attached to and detached from the exterior case 50 with the front panel 60 remaining closed (normal state), that is, without bothersome works such as opening and removal of the front panel 60.

The rotating brushes 72 are each composed of a rotation shaft 77 supported pivotably on the cover case 75 of the dust box 71 and brush bristles 78 transplanted on an outer circumferential surface of the rotation shaft 77, and are accommodated in the dust box 71 so as to extend in a longitudinal direction thereof and so as to face the brush bristles 78 with outside from the dust intakes 76.

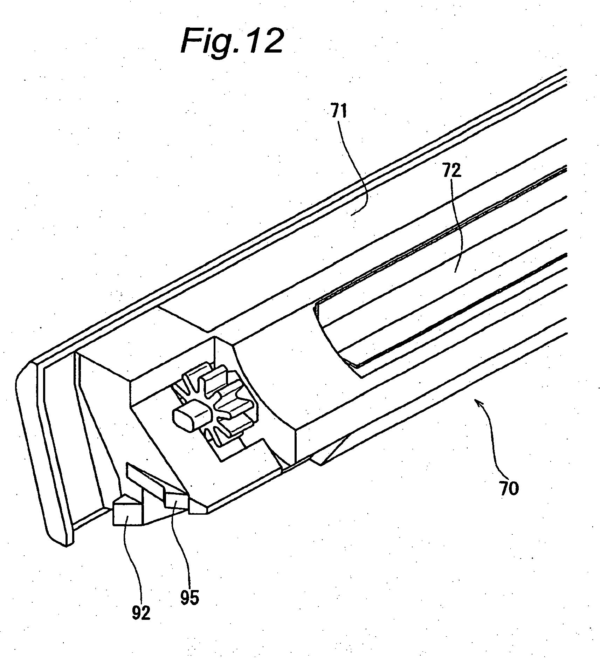

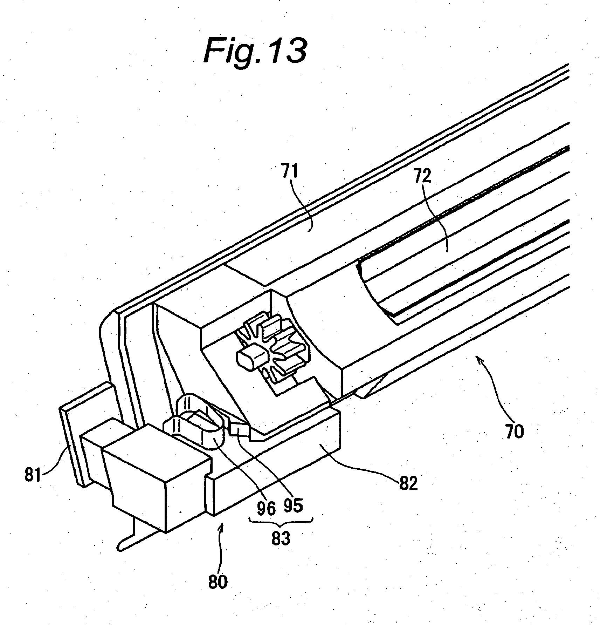

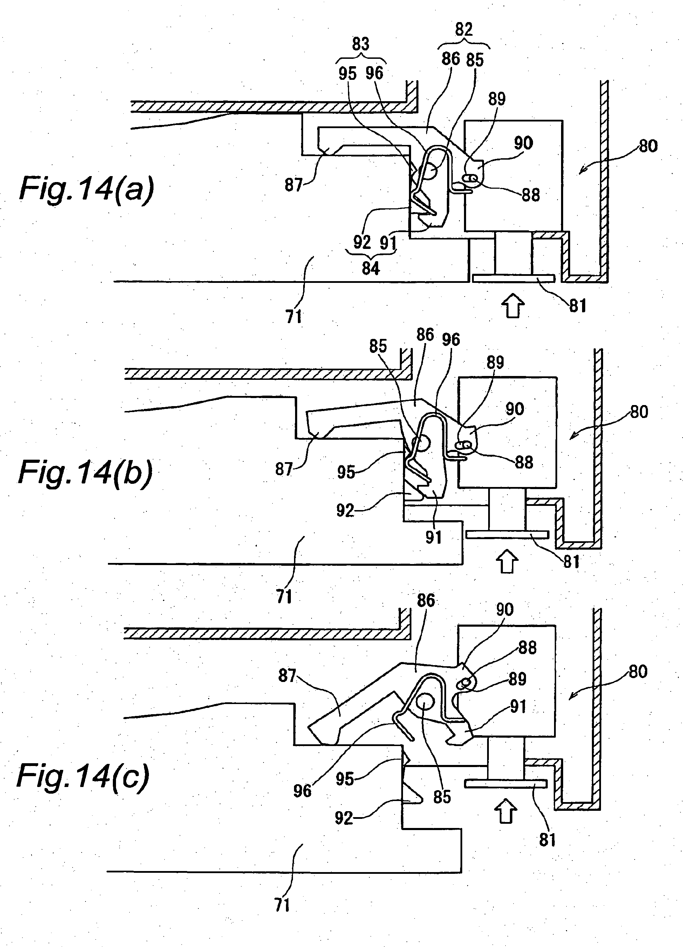

There is provided a removal unit 80 (Figs. 13, 14(a), 14(b), and 14(c)) for removing the dust box 71 of the cleaner unit 70, which is configured as above, from the exterior case 50 on the main unit side. As shown in Figs. 12 through 14(a), 14(b), and 14(c), the removal unit 80 has a push button 81 as an operating member, push-out members 82 for pushing out the dust box 71 in an outward direction from the main unit, i.e., to outside thereof by a push-in operation of the push button 81, fall-off restriction members 83 for restricting fall-off of the dust box 71 from the exterior case 50 when the dust box is pushed out by the push-out member 82, and holder members 84 for holding the dust box 71 in the exterior case 50 while the dust box 71 is attached to the exterior case 50.

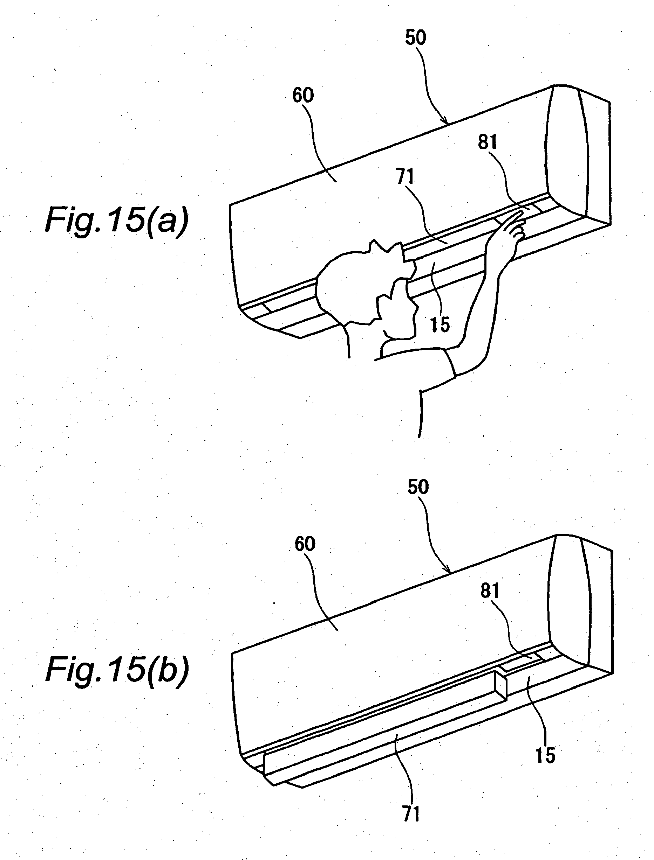

As shown in Figs. 15(a) and 15(b), the push button 81 is provided on the lower part of the exterior case 50, exposed on the outer surface of the air conditioner, so as to laterally adjoin the dust box 71. The operating member of the removal unit 80 is not limited to such a push button 81 but may be a lever or the like that is provided so as to be exposed on the outer surface of the air conditioner, for instance.

As shown in Figs. 14(a), 14(b), and 14(c), the push-out members 82 are composed of a support shaft 85 that is protruded on the lower part of the exterior case 50 and a pivot member 86 that is supported so as to be pivotable about the support shaft 85. The pivot member 86 has an arm part 87 in contact with a back surface of one end of the dust box 71 and a connection part 90 having a slot 89 in which a pin 88 protruded on the push button 81 is inserted. Thus a push of the push button 81 in an inward direction with respect to the main unit, i.e., to inside thereof causes a pivot motion of the pivot member 86 connected through the pin 88 and the slot 89, and the arm part 87 consequently pushes out the back surface of the one end of the dust box 71 to outside, so that the dust box 71 pushed out can be removed by being drawn out while being held by hand of a user. The deeper the push button 81 is pushed in, in this operation, the more greatly the pivot member 86 pivots and the farther outward the dust box 71 is pushed out. That is, a quantity by which the dust box 71 is pushed out by the push-out members 82 gradually increases in accordance with a quantity by which the push button 81 is moved, that is, pushed in.

An engagement piece 91 extending from the pivot member 86 is engaged with an engagement protrusion 92 formed on a side surface of the one end of the dust box 71, which is thereby held so as not to fall off from the exterior case 50 while the dust box 71 is attached to the exterior case 50, as shown in Fig. 14(a). That is, the holder members 84 are composed of the engagement piece 91 and the engagement protrusion 92.

The fall-off restriction members 83 are composed of a resisting plate 95 that is provided on the side surface of the one end of the dust box 71 so as to extend along outward and inward directions and of a leaf spring 96 that is provided on the lower part of the exterior case 50 and that is in press contact with the resisting plate 95. As shown in Figs. 12 and 13, the resisting plate 95 is shaped so that sideward swelling thereof gradually increases along the inward direction with respect to the main unit, i.e., the direction toward inside thereof and upsurges in inside end part thereof. The leaf spring 96 is generally bent in shape of a letter "U" and an end part thereof facing the side surface of the one end part of the dust box biases the resisting plate 95 opposite to a direction of the swelling thereof. When the dust box 71 is pushed out by the push-out member 82, therefore, an increase in the quantity by which the dust box 71 is pushed out causes the resisting plate 95 to push in the end part of the leaf spring 96 sideward in greater quantity, thereby causes increases in biasing force of the leaf spring 96 and in resistance against the push-out of the dust box 71, and prevents the dust box 71 from falling off to the outside. In particular, the upsurge of the sideward swelling in the inside end part of the resisting plate 95 further increases the push-out resistance immediately before the dust box 71 is removed, thus prevents complete removal of the dust box 71 only with the push-in of the push button 81 while allowing the complete removal of the dust box 71 with grasp and draw-out thereof by hand of a user, and thereby reliably prevents unprepared fall-off of the dust box 71.

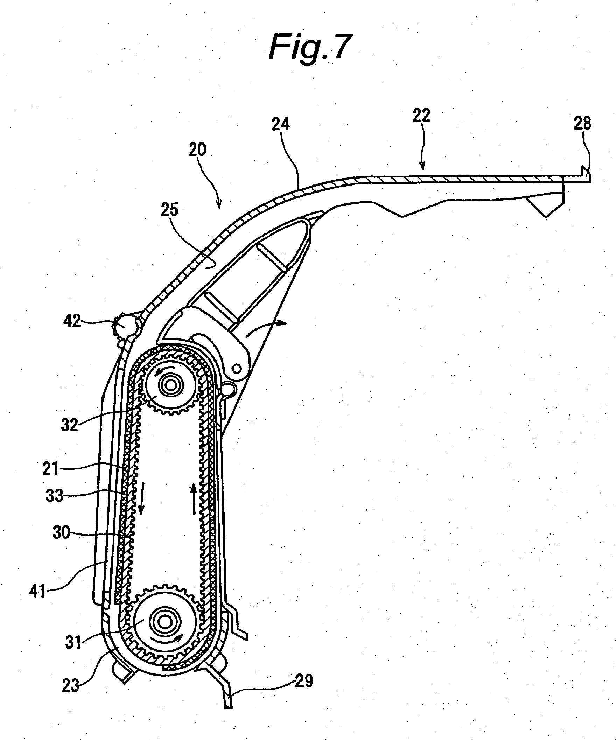

In the air conditioner, an air conditioning operation is performed with the filters 21 placed in the normal position shown in Figs. 2 and 5. Then automatic cleaning of the filters 21 is performed upon completion of the operation, completion of the operation lasting for a predetermined period, or the like. Hereinbelow, procedures of the above will be described with reference to Figs. 5 and 7. For convenience of the description, the lower part of each filter 21 in a state of Fig. 5 (state of normal operation) will be referred to as a winding start end part and the upper end part of the filter 21 therein will be referred to as a winding terminal end part. In the state of Fig. 5, initially, the motor 26 is activated to move the loop-like belts 33 and to rotate the rotating brush 72 of the cleaner unit 70. Thus the filter 21 descends together with the belts 33, so that the winding start end part passes through and around the lower pulleys 31 and ascends along a back side (rear side with respect to a direction of blow). On this occasion, the rotating brush 72 rotates opposite in direction to the lower pulleys 31 and scrapes off dust on a surface of the filter 21. In middle part of the filter 21, simultaneously, the projections 35 ... are sequentially fitted into the fitting holes 34 ... of the belts 33. As shown in Fig. 7, the cleaning of the part is completed upon contact of the winding terminal end part with the rotating brush 72, and then the drive of the loop-like belts 33 and the rotation of the rotating brush 72 are stopped, so that a feed cleaning operation is finished.

Subsequently, a return cleaning operation is performed, in which the drive of the loop-like belts 33 and the rotation of the rotating brush 72 are reversed in direction from the feed operation. In this operation, the drive of the loop-like belts 33 causes the winding terminal end part of the filter 21 to move up and disengage from the loop-like belts 33. While the loop-like belts 33 are curved by the upper pulleys 32 to the back side, the filter 21 tends to maintain an upright posture thereof through agency of rigidity of itself, and thus a distance between the both gradually increases, so that the return cleaning operation is completed once the filter 21 is returned to the normal position for use shown in Fig. 5.

The dust scraped off by such an automatic cleaning operation falls through the dust intakes 76 into the dust box 71 and is accommodated in the dust box 71. When the dust is piled up in the dust box 71, the dust box 71 is removed from the main unit side, i.e., from the exterior case 50 and the dust in the dust box 71 is dumped.

In the removal of the dust box 71, as shown in Fig. 15, the push button 81 is pushed in that adjoins the dust box 71 and that is exposed on the outer surface between the front panel 60 and the air outlets 15. In this operation, as described above, the dust box 71 is gradually pushed in the outward direction, in proportion to a quantity by which the push button 81 is pushed in, and the fall-off of the dust box 71 is prevented, so that the dust box 71 can smoothly and stably be removed. Thus troubles can be prevented such as scattering of the dust in the dust box 71 which may soil vicinity of the air conditioner, interior of a room and the like. In re-attachment of the dust box 71 to the exterior case 50 after disposal of the dust in the removed dust box 71, the arm part 87 is pushed to the inside by the back surface of the one end of the dust box 71, and the pivot member 86 consequently pivots to return to the initial position, so that the engagement protrusion 92 of the dust box 71 is engaged with the engagement piece 91 of the pivot member 86 in order to prevent fall-off of the dust box 71 from the exterior case 50.

Though the specific embodiments of the invention have been described above, the invention is not limited to the embodiments but may be embodied with various modifications within the scope of the appended claims.

For instance, the invention can be applied not only to air conditioners that perform cooling, heating, and dehumidification while taking in room air but also to air conditioners that have only air cleaning function for capturing dust contained in room air.

Besides, the invention can be applied not only to air conditioners that perform automatic cleaning with movement of filters but also to air conditioners that have a structure in which dust deposited on air filters is removed with movement of cleaning brushes.

The moving units for moving the filters are not limited to a type using the upper and lower pulleys and the loop-like belts that have been described above but may have a structure in which filters are transferred so as to be rolled over from the front side to the back side of the filter unit by rotational drive of pinions meshing with racks formed on the filters, for instance, or may be of conventional winding type or loop type.

Furthermore, the dust box and the operating member do not have to be exposed on the outer surface of the air conditioner or placed between the front panel and the air outlets and may be covered with the front panel, for instance.

Moreover, the removal unit for removing the dust box from the main unit side may be configured so that the dust box may be sprung out in the outward direction with respect to the main unit by a biasing force of a push-out spring upon disengagement between the engagement piece and the engagement protrusion of the holder members that is caused by an operation of the operating member. In this configuration, the fall-off restriction members are still required in order to prevent scattering of dust in the dust box. As a member having both functions of the operating member and the push-out spring may be used a magnet catcher that is used for an opening/shutting mechanism for a door of furniture and the like, for instance.

## Claims

1. An air conditioner having a filter automatic cleaning function of removing dust deposited on air filters (21, 21), the air conditioner comprising:
a dust box (71) for accommodating the dust removed from the air filters (21, 21), **characterized in that** the air conditioner furthermore comprises:
a removal unit (80) for removing the dust box (71) from main unit side, wherein
the removal unit (80) comprises:
an operating member (81) provided on the main unit side, and
a push-out member (82) for pushing out the dust box (71) in an outward direction from the main unit side by an operation of the operating member (81).

2. The air conditioner as claimed in Claim 1, wherein
the push-out member (82) is provided on the main unit side and is configured so that a quantity by which the push-out member (82) is pushed out gradually increases in accordance with a quantity by which the operating member (81) is moved.

3. The air conditioner as claimed in Claim 1, wherein
the removal unit (80) comprises fall-off restriction members (83) for restricting fall-off of the dust box (71) from the main unit side when the dust box (71) is pushed out by the push-out member (82).

4. The air conditioner as claimed in Claim 1, wherein
the removal unit (80) comprises holder members (84) for holding the dust box (71) on the main unit side while the dust box (71) is attached to the main unit side.

5. The air conditioner as claimed in Claim 1, wherein
the dust box (71) and the operating member (81) are provided so as to be exposed on an outer surface thereof.

6. The air conditioner as claimed in Claim 5, wherein
the dust box (71) and the operating member (81) are provided between a front panel (60) and air outlets (15) on the main unit side.

7. The air conditioner as claimed in Claim 1, wherein
the dust box (71) can be attached to and detached from the main unit side with the front panel (60) on the main unit side remaining closed.

## Patentansprüche

1. Klimaanlage mit einer automatischen Filterreinigungsfunktion zum Entfernen von Staub, der sich auf Luftfiltern (21, 21) abgesetzt hat, wobei die Klimaanlage aufweist:
einen Staubbehälter (71) zum Aufnehmen des Staubs, der von den Luftfiltern (21, 21) entfernt wird,
**dadurch gekennzeichnet, dass** die Klimaanlage ferner aufweist:
eine Entfernungseinheit (80) zum Entfernen des Staubbehälters (71) von einer Haupteinheitsseite, wobei
die Entfernungseinheit (80) aufweist:
ein Betätigungselement (81) auf der Haupteinheitsseite, und
ein Ausstoßelement (82) zum Herausschieben des Staubbehälters (71) in einer Auswärtsrichtung von der Haupteinheitsseite durch eine Betätigung des Betätigungselements (81).

2. Klimaanlage nach Anspruch 1, bei der
das Ausstoßelement (82) auf der Haupteinheitsseite vorgesehen und so eingerichtet ist, dass sich eine Menge, mit welcher das Ausstoßelement (82) herausgeschoben wird, graduell gemäß einer Menge erhöht, um welche das Betätigungselement (81) bewegt wird.

3. Klimaanlage nach Anspruch 1, bei welcher
die Entfernungseinheit (80) Abfall-Begrenzungselemente (83) zum Begrenzen eines Abfallens des Staubbehälters (71) von der Haupteinheitsseite aufweist, wenn der Staubbehälter (71) durch das Ausstoßelement (82) herausgeschoben wird.

4. Klimaanlage nach Anspruch 1, bei welcher
die Entfernungseinheit (80) Halteelemente (84) zum Halten des Staubbehälters (71) auf der Haupteinheitsseite aufweist, während der Staubbehälter (71) an der Haupteinheitsseite angebracht ist.

5. Klimaanlage nach Anspruch 1, bei welcher
der Staubbehälter (71) und das Betätigungselement (81) vorgesehen sind, um auf einer äußeren Oberfläche davon freigelegt zu sein.

6. Klimaanlage nach Anspruch 5, bei welcher
der Staubbehälter (71) und das Betätigungselement (81) zwischen einem Frontpanel (60) und Luftauslässen (15) auf der Haupteinheitsseite vorgesehen sind.

7. Klimaanlage nach Anspruch 1, bei welcher
der Staubbehälter (71) an die Haupteinheitsseite mit dem Frontpanel (60) auf der Haupteinheitsseite geschlossen angebracht und von dieser entfernt werden kann.

## Revendications

1. Climatiseur ayant une fonction de nettoyage automatique de filtre pour retirer la poussière déposée sur les filtres à air (21, 21), le climatiseur comprenant :
une boîte à poussière (71) pour accueillir la poussière retirée des filtres à air (21, 21),
**caractérisé en ce que** le climatiseur comprend en outre :
une unité de retrait (80) pour retirer la boîte à poussière (71) du côté de l'unité principale, dans lequel
l'unité de retrait (80) comprend :
un élément d'actionnement (81) prévu du côté de l'unité principale, et
un élément de poussée (82) pour faire sortir la boîte à poussière (71) dans une direction vers l'extérieur à partir du côté de l'unité principale par un actionnement de l'élément d'actionnement (81).

2. Climatiseur selon la revendication 1, dans lequel
l'élément de poussée (82) est prévu du côté de l'unité principale et est configuré de sorte qu'une quantité selon laquelle l'élément de poussée (82) est poussé, augmente progressivement selon une quantité selon laquelle l'élément d'actionnement (81) est déplacé.

3. Climatiseur selon la revendication 1, dans lequel
l'unité de retrait (80) comprend des éléments de limitation de chute (83) pour limiter la chute de la boîte à poussière (71) du côté de l'unité principale lorsque la boîte à poussière (71) est poussée par l'élément de poussée (82).

4. Climatiseur selon la revendication 1, dans lequel
l'unité de retrait (80) comprend des éléments de support (84) pour maintenir la boîte à poussière (71) du côté de l'unité principale alors que la boîte à poussière (71) est fixée du côté de l'unité principale.

5. Climatiseur selon la revendication 1, dans lequel
la boîte à poussière (71) et l'élément d'actionnement (81) sont prévus pour être exposés sur leur surface externe.

6. Climatiseur selon la revendication 5, dans lequel
la boîte à poussière (71) et l'élément d'actionnement (81) sont prévus entre un panneau avant (60) et des sorties d'air (15) du côté de l'unité principale.

7. Climatiseur selon la revendication 1, dans lequel
la boîte à poussière (71) peut être fixée sur et détachée du côté de l'unité principale, avec le panneau avant (60) du côté de l'unité principale qui reste fermé.
